# EUROPEAN PATENT APPLICATION

(11) **EP 3 905 290 A1**
(43) Date of publication of application: **03.11.2021**
(21) Application number: 19905766.2
(22) Date of filing: 17.12.2019
(51) Int. Cl.: H01G 9/02, H01G 9/145, H01G 9/15

(54) **SEPARATOR FOR ALUMINUM ELECTROLYTIC CAPACITOR AND ALUMINUM ELECTROLYTIC CAPACITOR**

(30) Priority: 26.12.2018 JP 2018243651
(71) Applicant: Nippon Kodoshi Corporation, Kochi-shi, Kochi 781-0395 (JP)
(72) Inventor: OCHI, Takafumi, Kochi-shi, Kochi 781-0395 (JP); ISHIGAYASUMI, Masaki, Kochi-shi, Kochi 781-0395 (JP); KUMAOKA, Hironori, Kochi-shi, Kochi 781-0395 (JP)
(74) Representative: Betten & Resch
(86) International application number: PCT/JP2019/049318
(87) International publication number: WO 2020/137674

(57) **Abstract**

The purpose of the present invention is to provide a separator which is capable of reducing ESR and improving electrostatic capacity while maintaining high short-circuit resistance, a solid electrolytic capacitor using the separator, and a hybrid electrolytic capacitor. To achieve this, the present invention has, for example, the following configuration. This separator which is to be used in an aluminum electrolytic capacitor and which is interposed between a pair of electrodes of a capacitor is such that the separator contains synthetic fiber, for example, polyamide fiber and/or fibrillated polyamide fiber, the droplet elimination times for one surface and for the opposite surface are 10-350 seconds, the ratio of the droplet elimination times is 1.0-2.0, the airtightness is 10-350 sec./100 ml, and the average pore size is 0.1-15.0 µm. Furthermore, the separator is characterized in that the synthetic fiber contains 20-80 mass% of fibrillated polyamide fiber and 20-80 mass% of fibrillated natural cellulose fiber.

## Description

### Technical Field

The present invention relates to a separator for an aluminum electrolytic capacitor and an aluminum electrolytic capacitor using the separator.

### Background Art

In recent years, electronic devices such as personal computers, home game machines, and automobile electric devices have been remarkably improved in performance, and at the same time, downsizing of these devices and the like has been strongly required. Therefore, there is an increasing need for higher performance and smaller size of components mounted on circuit boards and the like used in these electronic devices.

As one of components mounted on the circuit board, there is an aluminum electrolytic capacitor. An aluminum electrolytic capacitor (hereinafter, referred to as the "solid electrolytic capacitor") using a conductive polymer in a cathode material has better equivalent series resistance (ESR) characteristics than an aluminum electrolytic capacitor (hereinafter, referred to as the "non-solid electrolytic capacitor") using an electrolytic solution in a cathode material. Therefore, the solid electrolytic capacitor can be downsized by reducing the number of members, and is used in the personal computer, the game machine, and the like.

Further, in the personal computer and the like, an increase in the speed and functionality of a CPU is required, and an operation frequency is further increased.

A conduction mechanism of the non-solid electrolytic capacitor using the electrolytic solution is ion conduction, but a conduction mechanism of the solid electrolytic capacitor is electron conduction, and exhibits higher conductivity than the ion conduction. That is, since responsiveness to emit stored electrons is good, low ESR characteristics are obtained, and there is an advantage as a capacitor used around the CPU in a power supply circuit.

Recently, a conductive polymer hybrid aluminum electrolytic capacitor (hereinafter, referred to as the "hybrid electrolytic capacitor") using both a conductive polymer and an electrolytic solution as the cathode material has been put on the market by each capacitor manufacturer, and has also been used in automobile electric device applications where it is essential to have low ESR characteristics and no short-circuit defect.

As described above, the solid electrolytic capacitor and the hybrid electrolytic capacitor are widely applied to the automobile electric devices and the like requiring high reliability, including the personal computer and the home game machine.

The solid electrolytic capacitor is produced in such a manner that an electrode foil and a separator are overlapped and wound to form an element winding, then a defective portion of an aluminum oxide film of the electrode foil is repaired and unformed portions such as a cut surface and a tab of the electrode foil are formed, then forming a conductive polymer layer, and then the element winding is inserted into a case and sealed. The hybrid electrolytic capacitor is produced by forming a conductive polymer layer, then further impregnating the conductive polymer layer with an electrolytic solution, and inserting the element winding into a case and sealing the case.

As a method for holding a conductive polymer, which is the cathode material of the solid electrolytic capacitor and the hybrid electrolytic capacitor, in a capacitor element, there are a method for polymerizing the conductive polymer in the capacitor element and a method for impregnating the capacitor element with the conductive polymer polymerized in advance.

When the conductive polymer is polymerized in the capacitor element, the capacitor element is impregnated with a solution (hereinafter, referred to as the "polymerization liquid") containing a monomer and an oxidizing agent, and then heated and dried to be polymerized to form a conductive polymer layer in the capacitor element.

When the capacitor element is impregnated with the conductive polymer polymerized in advance, the capacitor element is impregnated with a suspension (hereinafter, referred to as the "dispersion liquid") in which the conductive polymer is dispersed in water, and then heated and dried to form the conductive polymer layer in the capacitor element.

In both the case of the polymerization liquid and the case of the dispersion liquid, the quality of the formation state of the conductive polymer layer inside the capacitor element, that is, the impregnation property with respect to the polymerization liquid or the dispersion liquid of the separator determines electrical characteristics of the solid electrolytic capacitor and the hybrid electrolytic capacitor.

Furthermore, recently, the use of the solid electrolytic capacitor and the hybrid electrolytic capacitor for in-vehicle applications also increases. In particular, electrification of automobiles progresses, and the number of electronic control units (hereinafter, referred to as the "ECU") which are electronic control devices for controlling various functions of the automobiles tends to increase.

Furthermore, as the number of products mounted in the vehicle interior such as a car navigation system and an airbag system increases, the ECU or the like mounted in the vehicle interior conventionally is ejected to the outside of the vehicle interior, and along with downsizing of the board, it is also necessary to mount the components in a limited space at a maximum high density. For this reason, downsizing and high functionality have been required for the components to be mounted. In order to meet these requirements, the solid electrolytic capacitor and the hybrid electrolytic capacitor, which are one of the components mounted on the ECU or the like, are also required to further reduce ESR and improve electrostatic capacity.

Further, as compared with components used in personal computers and home game machines, components used in automobiles may be affected by external vibration or impact, and the capacitors to be used are required to have short-circuit resistance so that the capacitors can withstand even severe environments for a long period. Therefore, the separator used for these capacitors is required to have a high shielding property between both electrodes.

As described above, in the in-vehicle capacitors, it is required to further reduce ESR and improve electrostatic capacity while maintaining high short-circuit resistance.

As separators, separators made of synthetic fiber, separators made of natural cellulose fiber, and separators containing both the synthetic fiber and the natural cellulose fiber have been used so far, and for the purpose of reduction of ESR and short-circuit resistance of aluminum electrolytic capacitors, solid electrolytic capacitors, electric double layer capacitors, and the like, for example, technologies described in Patent Literatures 1 to 5 have been disclosed.

Patent Literature 1 discloses technology for providing an electrolytic capacitor in which a high withstand voltage is maintained and impedance characteristics are improved by using electrolytic paper having a two-layer structure of a high density layer and a low density layer using one or more kinds of natural fiber pulp or regenerated cellulose fiber as raw materials.

Patent Literature 2 proposes a separator containing 70 mass% or more of beating regenerated cellulose fiber and having a two-layer structure including a fiber layer A obtained by Fourdrinier papermaking or tanmo papermaking and a fiber layer B obtained by cylinder papermaking. Technology for providing a power storage device capable of improving productivity by using the separator without adversely affecting internal resistance and leakage current characteristics is disclosed.

Patent Literature 3 discloses technology for providing a separator for a solid electrolytic capacitor that contains acrylic staple fiber and fibrillated cellulose to improve the impregnation property of a polymerization liquid of the conductive polymer, thereby reducing ESR.

Patent Literature 4 proposes a solid electrolytic capacitor using non-woven fabric containing polyester resin or a derivative thereof produced by a wet method. Since this separator is excellent in adhesion and adhesiveness of a solid electrolyte and has high physical strength and heat resistance, technology for providing a solid electrolytic capacitor excellent in impedance characteristics and leakage current characteristics by using the separator is disclosed.

Patent Literature 5 proposes stacked non-woven fabric including a non-woven fabric layer (I layer) made of ultrafine fiber having a fiber diameter of 0.1 to 4 µm and a fiber layer (II layer) made of thermoplastic resin fiber having a fiber diameter of 6 to 30 µm, in which the non-woven fabric layer (II layer) is present between two layers of the non-woven fabric layer (I layer). Technology for providing a solid electrolytic capacitor with higher performance by using the separator is disclosed.

### Citation List

### Patent Literature

Patent Literature 1: JP 6-168848 A
Patent Literature 2: JP 2016-25211 A
Patent Literature 3: JP 2009 -59730 A
Patent Literature 4: JP 2002 -246270 A
Patent Literature 5: JP 2013 -80828 A

### Summary of Invention

### Technical Problem

However, the separator described in Patent Literature 1 is made of only cellulose fiber, and at the time of being impregnated with the polymerization liquid or the dispersion liquid of the conductive polymer used in the solid electrolytic capacitor, the cellulose fiber is gradually decomposed under acidic conditions, so that the mechanical strength of the separator may be significantly reduced, or the polymerization of the conductive polymer may be inhibited by the reaction between the cellulose fiber and an oxidizing agent of the polymerization liquid.

Furthermore, the high density layer is very dense, and it is difficult to perform impregnation of the polymerization liquid or the dispersion liquid of the conductive polymer. For this reason, the short-circuit defect of the solid electrolytic capacitor may increase due to a decrease in the mechanical strength of the separator, or the ESR of the solid electrolytic capacitor may be deteriorated due to the deterioration in impregnation property of the polymerization liquid or the dispersion liquid of the conductive polymer.

If the separator of Patent Literature 1 is mixed with synthetic fiber in order to avoid a decrease in the mechanical strength with respect to the polymerization liquid or the dispersion liquid of the conductive polymer, the synthetic fiber is interposed between the cellulose fibers to inhibit hydrogen bonding between the cellulose fibers, so that the mechanical strength of the separator may decrease, leading to a problem that breakage or the like may occur at the time of forming the separator or at the time of forming the capacitor element. In addition, when the density of the high density layer is reduced in order to improve the impregnation property of the polymerization liquid or the dispersion liquid of the conductive polymer, gaps between the fibers constituting the separator are excessively widened, so that the denseness may be reduced and the short-circuit defect may be increased.

Further, since the separator containing the regenerated cellulose fiber having fibril with a small fiber diameter as in Patent Literature 2 has the very high denseness and the high shielding property, the separator is excellent in the short-circuit resistance, but has too high denseness, so that it is difficult to further improve the impregnation property of the polymerization liquid or the dispersion liquid of the conductive polymer. For this reason, it is difficult to further reduce the ESR and improve the electrostatic capacity in the solid electrolytic capacitor.

Further, since the regenerated cellulose is fiber in which cellulose is dissolved and spun, and the polymerization degree of cellulose is lower than that of the natural cellulose fiber, the resistance of the conductive polymer to the polymerization liquid or the dispersion liquid is further reduced, and the mechanical strength of the separator is reduced, so that the short-circuit defect of the capacitor may increase.

If a large amount of non-fibrillated fibers are mixed for the purpose of reducing the ESR and improving the electrostatic capacity by reducing the denseness of the separator in Patent Literature 2, the denseness of the separator is reduced, so that burrs and the like of an electrode foil easily penetrate the separator, and the short-circuit resistance of the solid electrolytic capacitor using the separator is reduced. In addition, when the synthetic fiber is mixed in order to avoid a decrease in the mechanical strength with respect to the polymerization liquid or the dispersion liquid of the conductive polymer, the synthetic fiber is interposed between the cellulose fibers to inhibit hydrogen bonding between the cellulose fibers, so that the mechanical strength of the separator is reduced, and a problem that the breakage or the like occurs at the time of forming the separator or at the time of forming the capacitor element may occur.

Further, the separator containing the acrylic staple fiber as in Patent Literature 3 has a problem that the impregnation property is high, but the denseness is low, so that the separator is excellent in reducing the ESR, but has the low short-circuit resistance.

If a large amount of fibrillated fibers are mixed for the purpose of improving the short-circuit resistance by increasing the denseness of the separator in Patent Literature 3, the denseness of the separator is increased, so that the impregnation property of the polymerization liquid or the dispersion liquid of the conductive polymer is deteriorated, and the ESR characteristics and the electrostatic capacity cannot be improved.

Furthermore, in the solid electrolytic capacitor using the separator made of only the non-fibrillated fiber as in Patent Literature 4, it is difficult to further improve the short-circuit resistance because the denseness is low.

If the fibrillated fiber is mixed for the purpose of improving the short-circuit resistance by increasing the denseness of the separator in Patent Literature 4, the denseness of the separator is increased, so that the impregnation property of the polymerization liquid or the dispersion liquid of the conductive polymer is deteriorated, and the ESR cannot be reduced and the electrostatic capacity cannot be improved.

Further, in a solid electrolytic capacitor using, as the separator, dry non-woven fabric made of continuous fiber produced by a melt-blown method or the like as in Patent Literature 5, the impregnation property of the polymerization liquid or the dispersion liquid of the conductive polymer is high, but the texture of the separator is poor, and the short-circuit resistance may not be satisfied for a recent demand.

If the separator is formed of only the non-woven fabric layer made of the ultrafine fiber having a fiber diameter of 0.1 to 4 µm for the purpose of improving the short-circuit resistance by increasing the denseness of the separator in Patent Literature 5, the separator becomes excessively dense, and the impregnation property of the polymerization liquid or the dispersion liquid of the conductive polymer is deteriorated, so that the ESR cannot be reduced and the electrostatic capacity cannot be improved.

As described above, in the conventional separators, there is a problem that the solid electrolytic capacitor and the hybrid electrolytic capacitor cannot meet further reduction in the ESR and improvement in the electrostatic capacity required in recent years while maintaining the high short-circuit resistance.

The present invention has been made in view of the above problems, and an object of the present invention is to provide a separator capable of reducing ESR and improving electrostatic capacity while maintaining high short-circuit resistance by being used in a solid electrolytic capacitor and a hybrid electrolytic capacitor, and a solid electrolytic capacitor and a hybrid electrolytic capacitor using the separator.

### Solution to Problem

As a means for solving the above-described problems and achieving the above-described object, an embodiment according to the present invention has, for example, the following configuration.

That is, a separator for an aluminum electrolytic capacitor is interposed between a pair of electrodes and contains synthetic fiber, droplet elimination times for one surface and for an opposite surface are 10 to 350 seconds, and a ratio of the droplet elimination times is 1.0 to 2.0.

For example, an airtightness is 10 to 350 sec./100 ml, and an average pore size is 0.1 to 15.0 µm. Further, for example, the synthetic fiber is polyamide fiber.

Further, for example, the polyamide fiber is fibrillated polyamide fiber. Alternatively, the synthetic fiber is made of only fibrillated fiber.

Further, for example, the synthetic fiber contains 20 to 80 mass% of fibrillated polyamide fiber and 20 to 80 mass% of fibrillated natural cellulose fiber.

Alternatively, there is provided an aluminum electrolytic capacitor using the separator according to any one of the above configurations.

In addition, a conductive polymer is used in a cathode material.

### Advantageous Effects of Invention

According to the present invention, it is possible to obtain a separator having a high impregnation property with respect to a polymerization liquid or a dispersion liquid of a conductive polymer while maintaining a high shielding property. By using the above separator in a solid electrolytic capacitor and a hybrid electrolytic capacitor, it is possible to reduce ESR and improve electrostatic capacity while maintaining short-circuit resistance.

### Description of Embodiments

Hereinafter, embodiments of the present invention will be described in detail.

In an aluminum electrolytic capacitor according to an embodiment of the present invention, for example, synthetic fiber is contained as a separator, and droplet elimination times for one surface and an opposite surface of the separator and a ratio of the droplet elimination times are controlled to constant ranges, so that gaps between fibers constituting the separator can be appropriately formed, and it is possible to enhance an impregnation property of a polymerization liquid or a dispersion liquid of a conductive polymer while maintaining a shielding property. Therefore, as the separator, it is possible to reduce ESR and improve electrostatic capacity while maintaining short-circuit resistance.

Further, by controlling an airtightness and an average pore size of the separator to constant ranges, the denseness of the separator can be controlled, and high short-circuit resistance can be maintained without inhibiting the impregnation property of the polymerization liquid or the dispersion liquid of the conductive polymer.

By setting the above-described synthetic fiber as polyamide fiber, heat resistance and chemical resistance of the separator can be enhanced.

By setting the above-described polyamide fiber as fibrillated polyamide fiber, the homogeneity of the separator can be enhanced, and the short-circuit resistance can be improved.

Further, by constituting the separator only with the fibrillated fiber, the denseness of the entire separator can be enhanced, and the short-circuit resistance can be improved.

Further, the above-described separator contains 20 to 80 mass% of fibrillated polyamide fiber and contains 20 to 80 mass% of fibrillated natural cellulose fiber, so that both the resistance and the mechanical strength to the polymerization liquid or the dispersion liquid of the conductive polymer can be achieved.

A separator according to an embodiment of the present invention is a separator for an aluminum electrolytic capacitor interposed between a pair of electrodes. The separator contains synthetic fiber, and droplet elimination times for one surface and an opposite surface of the separator are controlled to 10 to 350 seconds and a ratio of the droplet elimination times is controlled to 1.0 to 2.0, so that particularly favorable results are obtained.

The droplet elimination times for one surface and the opposite surface of the separator indicate wettability and spreadability of a polymerization liquid or a dispersion liquid of the conductive polymer of the separator.

The droplet elimination times for one surface and the opposite surface of the separator are preferably in a range of 10 to 350 seconds, more preferably in a range of 10 to 250 seconds, and still more preferably in a range of 10 to 200 seconds.

When the droplet elimination times are less than 10 seconds, the gaps between the fibers are excessively wide, the capillary phenomenon hardly acts during impregnation, the wettability and the spreadability are deteriorated, impregnation unevenness of the polymerization liquid or the dispersion liquid of the conductive polymer occurs, and a conductive polymer layer to be an electron conduction path is not uniformly formed.

When the droplet elimination times are more than 350 seconds, the gaps between the fibers are excessively dense, so that the separator is not impregnated with the polymerization liquid or the dispersion liquid of the conductive polymer, and the conductive polymer layer to be the electron conduction path cannot be formed.

For this reason, in both the case where the droplet elimination times for one surface and the opposite surface of the separator are less than 10 seconds and the case where the droplet elimination times are more than 350 seconds, it is not possible to reduce the ESR and improve the electrostatic capacity when a solid electrolytic capacitor and a hybrid electrolytic capacitor are formed.

The ratio of the droplet elimination times of the separator indicates the homogeneity of the separator surface and the internal fiber structure.

The ratio of the droplet elimination times of the separator is preferably in a range of 1.0 to 2.0, more preferably in a range of 1.0 to 1.5. When the ratio of the droplet elimination times is more than 2.0, gaps between the fibers constituting the separator surface and the inside of the separator become sparse, the homogeneity of the entire separator is low, impregnation unevenness of the polymerization liquid or the dispersion liquid of the conductive polymer occurs, and the conductive polymer layer to be the electron conduction path is not uniformly formed. Therefore, when the ratio of the droplet elimination times is more than 2.0, it is not possible to reduce the ESR and improve the electrostatic capacity when the solid electrolytic capacitor and the hybrid electrolytic capacitor are formed.

By mixing the synthetic fiber in the separator, acid resistance and oxidation resistance of the separator are improved, and a decrease in mechanical strength of the separator due to the polymerization liquid or the dispersion liquid of the conductive polymer can be suppressed. Further, since the synthetic fiber does not express hydrogen bonding between fibers unlike the natural cellulose fiber, it is possible to suppress excessive blockage of the gaps between the fibers, so that the conductive polymer layer can be uniformly formed over the entire separator.

In the separator according to the embodiment of the present invention, the airtightness of the separator is preferably in a range of 10 to 350 sec./100 ml, more preferably in a range of 10 to 250 sec./100 ml, and still more preferably in a range of 10 to 200 sec./100 ml, in consideration of the impregnation property and the short-circuit resistance of the polymerization liquid or the dispersion liquid of the conductive polymer. Further, the average pore size of the separator is preferably in a range of 0.1 to 15.0 µm, more preferably in a range of 0.1 to 10 µm.

The denseness of the separator can be controlled by setting the airtightness of the separator to 10 to 350 sec./100 ml and setting the average pore size to a range of 0.1 to 15.0 µm.

When the airtightness of the separator is less than 10 sec./100 ml and the average pore size is more than 15.0 µm, the denseness of the separator is insufficient, and burrs and the like of an electrode foil easily penetrate the separator, so that a short-circuit defect rate may not be reduced.

When the airtightness of the separator is more than 350 sec./100 ml and the average pore size is less than 0.1 µm, the separator is excessively dense, so that it is difficult to perform impregnation of the polymerization liquid or the dispersion liquid of the conductive polymer, and it may be impossible to reduce the ESR and improve the electrostatic capacity when the solid electrolytic capacitor and the hybrid electrolytic capacitor are formed.

As the type of the synthetic fiber constituting the separator, polyamide fiber is preferable from the viewpoint of chemical resistance and heat resistance.

Furthermore, by using fibrillated polyamide fiber as the polyamide fiber, the homogeneity of the separator can be enhanced. Here, a binder effect of the fibrillated polyamide fiber is not particularly limited as long as the droplet elimination times for one surface and the opposite surface of the separator and the ratio of the droplet elimination times can be satisfied.

In consideration of the short-circuit resistance, the separator is preferably made of only fibrillated fiber capable of enhancing the denseness of the entire separator.

As the fibrillated fiber constituting the separator, it is preferable to contain 20 to 80 mass% of fibrillated polyamide fiber and contain 20 to 80 mass% of fibrillated natural cellulose fiber.

By containing 20 to 80 mass% of the fibrillated polyamide fiber, the acid resistance and the oxidation resistance of the separator are improved, and a decrease in mechanical strength of the separator due to the polymerization liquid or the dispersion liquid of the conductive polymer can be suppressed.

When the content of the fibrillated polyamide fiber is less than 20 mass%, that is, the content of the fibrillated natural cellulose fiber is more than 80 mass%, the acid resistance and the oxidation resistance of the separator are reduced, and the mechanical strength of the separator after impregnation of the polymerization liquid or the dispersion liquid of the conductive polymer is reduced, so that the short-circuit defect rate of the capacitor may increase.

When the content of the fibrillated polyamide fiber is more than 80 mass%, that is, the content of the fibrillated natural cellulose fiber is less than 20 mass%, this decreases the affinity with the polymerization liquid or the dispersion liquid of the conductive polymer of the separator due to the action of the hydroxyl group, so that the conductive polymer layer cannot be uniformly formed up to the inside of the capacitor element, and the ESR cannot be reduced and the electrostatic capacity cannot be improved.

In addition, the fibrillated polyamide fiber to be the synthetic fiber may inhibit hydrogen bonding between cellulose fibers, the mechanical strength of the separator may decrease, and a winding defect such as breakage of the separator may occur in a capacitor element winding step, or burrs and the like of the electrode foil may easily penetrate the separator, so that the short-circuit defect rate of the capacitor may increase.

Among the fibrillated polyamide fibers constituting the separator, fibrillated aramid fiber is preferable from the viewpoint of heat resistance.

The fibrillated natural cellulose fiber material is not particularly limited, and for example, chemical pulp for manufacturing paper extracted by digesting wood, nonwood, or the like by a sulfate (kraft) method, a sulfite method, or an alkali method and extracted can be used. Among them, jute pulp, sisal hemp pulp, and Manila hemp pulp are preferable as the natural cellulose fiber from the viewpoint of the mechanical strength of the separator and the impregnation property of the polymerization liquid or the dispersion liquid of the conductive polymer.

Here, the fibril is, for example, a whisker-like filament that is thinner than the original fiber generated at the time of being treated with the mechanical external force of the fiber or the like.

Examples of means for fibrillation of the fiber can include beating treatment. The equipment used for beating the fiber is not particularly limited. In general, a beater, a conical refiner, a disk refiner, a high-pressure homogenizer, and the like are exemplified. The fibers used in the present embodiment may be beaten alone and mixed before papermaking, or the mixed fibers may be beaten.

In an example of the present embodiment, a CSF value of the fiber constituting the separator is set in a range of 0 to 500 ml for the purpose of imparting sufficient mechanical strength as the separator and forming uniform texture, in addition to the viewpoint of the denseness of the separator and the impregnation property of the polymerization liquid or the dispersion liquid of the conductive polymer. However, the CSF value of the fiber constituting the separator is not particularly limited as long as the sufficient mechanical strength as the separator can be imparted and the uniform texture formation can be performed.

In consideration of the necessity at the time of forming the separator and the mechanical strength at the time of handling, for example, a wet-and-heat sealing resin such as polyvinyl alcohol or a paper strengthening agent such as polyacrylamide can be used as the binder material. The content of the binder material is not particularly limited as long as the desired droplet elimination times for one surface and the opposite surface of the separator and the desired ratio of the droplet elimination times can be satisfied. However, when the content is up to about 30 mass%, the impregnation property of the polymerization liquid or the dispersion liquid of the conductive polymer is hardly affected.

In the embodiment of the present invention, the thickness and density of the separator can be set to any thickness and density in consideration of the droplet elimination times for one surface and the opposite surface of the separator and the ratio of the droplet elimination times. In general, when the thickness is about 20 to 70 µm and the density is about 0.200 to 0.600 g/cm³, the droplet elimination times for one surface and the opposite surface of the separator and the ratio of the droplet elimination times are easily set to preferable ranges, but are not limited to these ranges.

Furthermore, the separator of the present embodiment preferably has the tensile strength of 7.0 N/15 mm or more. When the tensile strength is lower than 7.0 N/15 mm, the separator is easily broken during formation of the separator or formation of the capacitor. In addition, burrs and the like of the electrode foil easily penetrate the separator, and the short-circuit resistance is also lowered.

In an example of the embodiment of the present invention, wet non-woven fabric formed using a papermaking method has been employed as the separator. The papermaking format of the separator is not particularly limited as long as the droplet elimination times for one surface and the opposite surface of the separator and the ratio of the droplet elimination times can be satisfied, and papermaking formats such as Fourdrinier papermaking, tanmo papermaking, and cylinder papermaking can be used. For example, by adopting a multilayer structure in which layers formed by these papermaking formats are overlapped, gaps between fibers can be more appropriately formed, so that it is possible to further enhance the impregnation property of the polymerization liquid or the dispersion liquid of the conductive polymer while maintaining the shielding property.

In the multilayer structure, for example, when the separator has a two-layer structure including a fiber layer A and a fiber layer B, a CSF value of the fiber constituting the fiber layer A is set to 0 to 100 ml, so that it is possible to enhance the shielding property while maintaining the impregnation property of the polymerization liquid or the dispersion liquid of the conductive polymer. Further, a CSF value of the fiber constituting the fiber layer B is set to 100 ml or more and 500 ml or less, so that it is possible to enhance the impregnation property of the polymerization liquid or the dispersion liquid of the conductive polymer while maintaining the shielding property. Further, a difference between the CSF values of the fibers constituting the fiber layer A and the fiber layer B is set in a range of 50 to 400 ml, so that the distortion of an interface between the fiber layer A and the fiber layer B is small, and the conductive polymer layer formed inside the separator can be formed more uniformly.

Furthermore, at the time of papermaking, additives such as a dispersing agent, an antifoaming agent, and a paper strengthening agent may be added as long as the content of impurities does not affect the separator for the capacitor, and post-processing such as paper strengthening processing, lyophilic processing, calendering, and embossing may be performed after formation of a paper layer.

However, the present invention is not limited to the wet non-woven fabric obtained by the papermaking method, and there is no problem even in a method of forming a film by casting a fiber dispersion liquid as used in a film forming method.

In the aluminum electrolytic capacitor of the present embodiment, the separator having the above configuration is used as the separator, the separator is interposed between the pair of electrodes, and the conductive polymer is used as the cathode material.

The solid electrolytic capacitor and the hybrid electrolytic capacitor using the separator of the embodiment of the present invention adopting the above configuration have a high impregnation property with respect to the polymerization liquid or the dispersion liquid of the conductive polymer while maintaining a high shielding property. That is, this separator is used in the solid electrolytic capacitor and the hybrid electrolytic capacitor, so that it is possible to reduce the ESR and improve the electrostatic capacity while maintaining the short-circuit resistance.

### [Method for measuring characteristics of separator and aluminum electrolytic capacitor]

Specific measurement of each characteristic of the separator and the aluminum electrolytic capacitor of the present embodiment is performed under the following conditions and methods.

### [CSF]

CSF is measured according to JIS P 8121-2 'Pulpfreeness test method-Part 2: Canadian standard freeness method' (ISO5267-2 'Pulps-Determination of drainability-Part 2: "Canadian Standard" freeness method').

### [Thickness]

The thickness of the separator is measured using the method of folding into ten pieces of paper in '5.1.3 Case of folding paper and measuring thickness' using the micrometer of '5.1.1 Measuring device and measuring method, a Case using an external micrometer' regulated in JIS C 2300-2 'Cellulosic papers for electrical purposes-Part 2: Methods of test', 5.1 Thickness.

### [Density]

The density of the separator in a bone dry condition is measured using the method regulated in Method B of JIS C 2300-2 'Cellulosic papers for electrical purposes-Part 2: Methods of test', 7.0A Density.

### [Tensile strength]

The longitudinal tensile strength of the separator is measured using the method regulated in JIS C 2300-2 'Cellulosic papers for electrical purposes-Part 2: Methods of test', 8 Tensile strength and stretching.

### [Ratio of droplet elimination time and droplet elimination time]

For the droplet elimination time of the separator, droplets of 50 µl of pure water are dropped onto the separator from a position of 10 to 50 mm from a measurement surface so that one droplet is dripped. A time until the dropped droplets permeate the separator and completely disappear is measured, and this is taken as the droplet elimination time. This measurement is performed for each of one surface and the opposite side surface. During the measurement, the separator is held in a jig so that a space is formed between the separator and the desk surface to prevent the separator and the desk surface from coming into contact with each other.

In the calculation of the ratio of the droplet elimination times, a value obtained by dividing a larger value of the droplet elimination times for one surface and the opposite surface of the separator by a smaller value is taken as the ratio of the droplet elimination times of the separator. The measurement of the droplet elimination times is performed in an environment of the room temperature of 20°C and the relative humidity of 65%.

### [Airtightness]

A time suitable for permeation of 100 ml of air is measured as the air impermeability of the separator using a B type tester by the method regulated in JIS P 8117 'Paper and board-Determination of air permeance and air (medium range)-Gurley method'. However, an adapter having a hole portion with a diameter of 6 mm is used.

### [Average pore size]

For an average pore size of the separator, the average pore size (µm) is calculated from a pore diameter distribution measured by a bubble point method (ASTMF316-86, JIS K3832) using Parm-Porometer manufactured by PMI. For the measurement of the average pore size, GALWICK (manufactured by Porous Materials, Inc.) is used as a test liquid.

### [Step of producing solid electrolytic capacitor]

Using the separators of each example and each conventional example, two types of solid electrolytic capacitors, that is, a solid electrolytic capacitor having a rated voltage of 6.3 V and having a diameter of 8.0 mm and a height of 7.0 mm and a solid electrolytic capacitor having a rated voltage of 50 V and having a diameter of 8.0 mm and a height of 10.0 mm are produced.

A specific method for producing the solid electrolytic capacitor is as follows.

A capacitor element is produced by winding with a separator interposed therebetween so that an anode foil and a cathode foil on which etching processing and oxide film forming processing have been performed do not come into contact with each other. The produced capacitor element is dried after re-formation processing.

In the case of the solid electrolytic capacitor with the rated voltage of 6.3 V, the capacitor element is impregnated with a conductive polymer polymerization solution and then heated and polymerized, and a solvent is dried to form a conductive polymer layer. In the case of the solid electrolytic capacitor with the rated voltage of 50 V, the capacitor element is impregnated with a conductive polymer dispersion liquid and then heated and dried to form a conductive polymer layer. Then, the capacitor element is put in a predetermined case, an opening is sealed, and aging is performed to obtain each solid electrolytic capacitor.

### [Step of producing hybrid electrolytic capacitor]

Using the separators of each example and each conventional example, two types of hybrid electrolytic capacitors, that is, a hybrid electrolytic capacitor having a rated voltage of 16 V and having a diameter of 10.0 mm and a height of 10.5 mm and a hybrid electrolytic capacitor having a rated voltage of 80 V and having a diameter of 8.0 mm and a height of 10.0 mm are produced.

A specific method for producing the hybrid electrolytic capacitor is as follows.

A capacitor element is produced by winding with a separator interposed therebetween so that an anode foil and a cathode foil on which etching processing and oxide film forming processing have been performed do not come into contact with each other. The produced capacitor element is dried after re-formation processing.

In the case of the hybrid electrolytic capacitor with the rated voltage of 16 V, the capacitor element is impregnated with a conductive polymer polymerization solution and then heated and polymerized, and a solvent is dried to form a conductive polymer layer. In the case of the hybrid electrolytic capacitor with the rated voltage of 80 V, the capacitor element is impregnated with a conductive polymer dispersion liquid and then heated and dried to form a conductive polymer layer. Then, the capacitor element is impregnated with a driving electrolytic solution, the capacitor element is put in a predetermined case, an opening is sealed, and aging is performed to obtain each hybrid electrolytic capacitor.

### [ESR]

The ESR of the produced capacitor element is measured using an LCR meter under conditions of a temperature of 20°C and a frequency of 100 kHz.

### [Electrostatic capacity]

The electrostatic capacity is calculated by the method of "4.7 Electrostatic capacity" regulated in JIS C 5101-1 'Fixed capacitor for electronic device-Part 1: General rules for each item'.

### [Short-circuit defect rate]

For a short-circuit defect rate, the number of short-circuit defects generated during aging is counted using the wound capacitor element, and the number of elements with the short-circuit defects is divided by the number of capacitor elements subjected to aging to calculate the short-circuit defect rate as a percentage.

### [Examples]

Hereinafter, specific examples and the like of the separator according to the embodiment of the present invention will be described with reference to Tables 1 to 4.

Table 1 shows a raw material and mixing of each separator of Examples 1 to 7, Reference Examples 1 to 4, Comparative Examples 1 to 3, and Conventional Examples 1 to 5, and Table 2 shows evaluation results of each separator. Further, Table 3 shows performance evaluation results of solid electrolytic capacitors using the separators shown in Tables 1 and 2, and Table 4 shows performance evaluation results of hybrid electrolytic capacitors using the separators shown in Tables 1 and 2.

### [Example 1]

A two-layer separator of Example 1 was produced by performing cylinder/tanmo papermaking using a raw material having a CSF value of 0 ml obtained by mixing 80 mass% of fibrillated aramid fiber and 20 mass% of fibrillated natural cellulose fiber and a raw material having a CSF value of 400 ml obtained by mixing 80 mass% of fibrillated aramid fiber and 20 mass% of fibrillated natural cellulose fiber.

A thickness of the completed separator of Example 1 was 20 µm, a density was 0.500 g/cm³, a tensile strength was 9.8 N/15 mm, a droplet elimination time was 17 seconds on one surface and 10 seconds on the opposite surface, a ratio of the droplet elimination times was 1.7, an airtightness was 280 sec./100 ml, and an average pore size was 0.1 µm.

### [Example 2]

A two-layer separator of Example 2 was produced by performing cylinder/tanmo papermaking using a raw material having a CSF value of 20 ml obtained by mixing 20 mass% of fibrillated aramid fiber and 80 mass% of fibrillated natural cellulose fiber and a raw material having a CSF value of 300 ml obtained by mixing 20 mass% of fibrillated aramid fiber and 80 mass% of fibrillated natural cellulose fiber.

A thickness of the completed separator of Example 2 was 70 µm, a density was 0.300 g/cm³, a tensile strength was 14.3 N/15 mm, a droplet elimination time was 200 seconds on one surface and 150 seconds on the opposite surface, a ratio of the droplet elimination times was 1.3, an airtightness was 350 sec./100 ml, and an average pore size was 0.5 µm.

### [Example 3]

A two-layer separator of Example 3 was produced by performing cylinder/tanmo papermaking using a raw material having a CSF value of 40 ml obtained by mixing 50 mass% of fibrillated aramid fiber and 50 mass% of fibrillated natural cellulose fiber and a raw material having a CSF value of 250 ml obtained by mixing 50 mass% of fibrillated aramid fiber and 50 mass% of fibrillated natural cellulose fiber.

A thickness of the completed separator of Example 3 was 40 µm, a density was 0.250 g/cm³, a tensile strength was 7.0 N/15 mm, a droplet elimination time was 250 seconds on one surface and 200 seconds on the opposite surface, a ratio of the droplet elimination times was 1.3, an airtightness was 200 sec./100 ml, and an average pore size was 3.0 µm.

### [Example 4]

A two-layer separator of Example 4 was produced by performing cylinder/tanmo papermaking using a raw material obtained by mixing 30 mass% of polyvinyl alcohol as a binder material with a raw material having a CSF value of 40 ml obtained by mixing 35 mass% of fibrillated aramid fiber and 35 mass% of fibrillated natural cellulose fiber, and a raw material having a CSF value of 250 ml obtained by mixing 50 mass% of fibrillated aramid fiber and 50 mass% of fibrillated natural cellulose fiber.

A thickness of the completed separator of Example 4 was 35 µm, a density was 0.600 g/cm³, a tensile strength was 12.5 N/15 mm, a droplet elimination time was 350 seconds on one surface and 200 seconds on the opposite surface, a ratio of the droplet elimination times was 1.8, an airtightness was 50 sec./100 ml, and an average pore size was 15.0 µm.

### [Example 5]

A two-layer separator of Example 5 was produced by performing cylinder/tanmo papermaking using a raw material having a CSF value of 60 ml obtained by mixing 40 mass% of fibrillated aramid fiber and 60 mass% of fibrillated natural cellulose fiber and a raw material having a CSF value of 200 ml obtained by mixing 60 mass% of fibrillated aramid fiber and 40 mass% of fibrillated natural cellulose fiber.

A thickness of the completed separator of Example 5 was 60 µm, a density was 0.200 g/cm³, a tensile strength was 11.7 N/15 mm, a droplet elimination time was 150 seconds on one surface and 150 seconds on the opposite surface, a ratio of the droplet elimination times was 1.0, an airtightness was 10 sec./100 ml, and an average pore size was 13.0 µm.

### [Example 6]

A two-layer separator of Example 6 was produced by performing cylinder/tanmo papermaking using a raw material having a CSF value of 80 ml obtained by mixing 30 mass% of fibrillated aramid fiber and 70 mass% of fibrillated natural cellulose fiber and a raw material having a CSF value of 250 ml obtained by mixing 70 mass% of fibrillated aramid fiber and 30 mass% of fibrillated natural cellulose fiber.

A thickness of the completed separator of Example 6 was 30 µm, a density was 0.400 g/cm³, a tensile strength was 13.1 N/15 mm, a droplet elimination time was 120 seconds on one surface and 80 seconds on the opposite surface, a ratio of the droplet elimination times was 1.5, an airtightness was 250 sec./100 ml, and an average pore size was 1.0 µm.

### [Example 7]

A two-layer separator of Example 7 was produced by performing cylinder/tanmo papermaking using a raw material having a CSF value of 100 ml obtained by mixing 20 mass% of fibrillated aramid fiber and 80 mass% of fibrillated natural cellulose fiber and a raw material having a CSF value of 150 ml obtained by mixing 80 mass% of fibrillated aramid fiber and 20 mass% of fibrillated natural cellulose fiber.

A thickness of the completed separator of Example 7 was 50 µm, a density was 0.350 g/cm³, a tensile strength was 10.5 N/15 mm, a droplet elimination time was 100 seconds on one surface and 50 seconds on the opposite surface, a ratio of the droplet elimination times was 2.0, an airtightness was 150 sec./100 ml, and an average pore size was 10.0 µm.

### [Reference Example 1]

A two-layer separator of Reference Example 1 was produced by performing cylinder/tanmo papermaking using a raw material having a CSF value of 0 ml obtained by mixing 80 mass% of fibrillated aramid fiber and 20 mass% of fibrillated natural cellulose fiber and a raw material having a CSF value of 50 ml obtained by mixing 80 mass% of fibrillated aramid fiber and 20 mass% of fibrillated natural cellulose fiber.

A thickness of the completed separator of Reference Example 1 was 30 µm, a density was 0.300 g/cm³, a tensile strength was 12.0 N/15 mm, a droplet elimination time was 280 seconds on one surface and 250 seconds on the opposite surface, a ratio of the droplet elimination times was 1.1, an airtightness was 400 sec./100 ml, and an average pore size was 0.5 µm.

### [Reference Example 2]

A two-layer separator of Reference Example 2 was produced by performing cylinder/tanmo papermaking using a raw material having a CSF value of 0 ml obtained by mixing 20 mass% of fibrillated aramid fiber and 80 mass% of fibrillated natural cellulose fiber and a raw material having a CSF value of 50 ml obtained by mixing 20 mass% of fibrillated aramid fiber and 80 mass% of fibrillated natural cellulose fiber.

A thickness of the completed separator of Reference Example 2 was 50 µm, a density was 0.350 g/cm³, a tensile strength was 16.0 N/15 mm, a droplet elimination time was 330 seconds on one surface and 300 seconds on the opposite surface, a ratio of the droplet elimination times was 1.1, an airtightness was 340 sec./100 ml, and an average pore size was 0.08 µm.

### [Reference Example 3]

A two-layer separator of Reference Example 3 was produced by performing cylinder/tanmo papermaking using a raw material having a CSF value of 200 ml obtained by mixing 20 mass% of fibrillated aramid fiber and 80 mass% of fibrillated natural cellulose fiber and a raw material having a CSF value of 500 ml obtained by mixing 20 mass% of fibrillated aramid fiber and 80 mass% of fibrillated natural cellulose fiber.

A thickness of the completed separator of Reference Example 3 was 35 µm, a density was 0.500 g/cm³, a tensile strength was 9.9 N/15 mm, a droplet elimination time was 50 seconds on one surface and 40 seconds on the opposite surface, a ratio of the droplet elimination times was 1.3, an airtightness was 15 sec./100 ml, and an average pore size was 18.0 µm.

### [Reference Example 4]

A two-layer separator of Reference Example 4 was produced by performing cylinder/tanmo papermaking using a raw material having a CSF value of 200 ml obtained by mixing 80 mass% of fibrillated aramid fiber and 20 mass% of fibrillated natural cellulose fiber and a raw material having a CSF value of 500 ml obtained by mixing 80 mass% of fibrillated aramid fiber and 20 mass% of fibrillated natural cellulose fiber.

A thickness of the completed separator of Reference Example 4 was 40 µm, a density was 0.400 g/cm³, a tensile strength was 8.5 N/15 mm, a droplet elimination time was 120 seconds on one surface and 100 seconds on the opposite surface, a ratio of the droplet elimination times was 1.2, an airtightness was 5 sec./100 ml, and an average pore size was 14.0 µm.

### [Comparative Example 1]

A two-layer separator of Comparative Example 1 was produced by performing cylinder/tanmo papermaking using a raw material having a CSF value of 300 ml obtained by mixing 10 mass% of fibrillated aramid fiber and 90 mass% of fibrillated natural cellulose fiber and a raw material having a CSF value of 600 ml obtained by mixing 10 mass% of fibrillated aramid fiber and 90 mass% of fibrillated natural cellulose fiber.

A thickness of the completed separator of Comparative Example 1 was 50 µm, a density was 0.300 g/cm³, a tensile strength was 10.5 N/15 mm, a droplet elimination time was 10 seconds on one surface and 7 seconds on the opposite surface, a ratio of the droplet elimination times was 1.4, an airtightness was 12 sec./100 ml, and an average pore size was 17.0 µm.

### [Comparative Example 2]

A two-layer separator of Comparative Example 2 was produced by performing cylinder/tanmo papermaking using a raw material obtained by mixing 40 mass% of polyvinyl alcohol as a binder material with a raw material having a CSF value of 0 ml obtained by mixing 30 mass% of fibrillated aramid fiber and 30 mass% of fibrillated natural cellulose fiber, and a raw material having a CSF value of 50 ml obtained by mixing 50 mass% of fibrillated aramid fiber and 50 mass% of fibrillated natural cellulose fiber.

A thickness of the completed separator of Comparative Example 2 was 40 µm, a density was 0.350 g/cm³, a tensile strength was 16.8 N/15 mm, a droplet elimination time was 400 seconds on one surface and 220 seconds on the opposite surface, a ratio of the droplet elimination times was 1.8, an airtightness was 110 sec./100 ml, and an average pore size was 0.09 µm.

### [Comparative Example 3]

A two-layer separator of Comparative Example 3 was produced by performing cylinder/tanmo papermaking using a raw material having a CSF value of 50 ml obtained by mixing 90 mass% of fibrillated aramid fiber and 10 mass% of fibrillated natural cellulose fiber and a raw material having a CSF value of 500 ml obtained by mixing 90 mass% of fibrillated aramid fiber and 10 mass% of fibrillated natural cellulose fiber.

A thickness of the completed separator of Comparative Example 3 was 30 µm, a density was 0.400 g/cm³, a tensile strength was 5.8 N/15 mm, a droplet elimination time was 240 seconds on one surface and 80 seconds on the opposite surface, a ratio of the droplet elimination times was 3.0, an airtightness was 9 sec./100 ml, and an average pore size was 11.0 µm.

### [Conventional Example 1]

A separator manufactured by a method similar to the method described in Example 3 of Patent Literature 1 was produced and used as a separator of Conventional Example 1.

The separator of Conventional Example 1 was a Fourdrinier/cylinder two-layer separator made of a raw material of 100 mass% (a CSF value of 0 ml) of fibrillated natural cellulose fiber and a raw material of 100 mass% (a CSF value of 700 ml) of fibrillated natural cellulose fiber, in which a thickness was 50 µm, a density was 0.639 g/cm³, a tensile strength was 55.0 N/15 mm, a droplet elimination time was 1100 seconds on one surface and 60 seconds on the opposite surface, and a ratio of the droplet elimination times was 18.3. An airtightness and an average pore size could not be measured because denseness of the separator was very high.

### [Conventional Example 2]

A separator manufactured by a method similar to the method described in Example 7 of Patent Literature 2 was produced and used as a separator of Conventional Example 2.

The separator of Conventional Example 2 was a Fourdrinier/cylinder two-layer separator made of a raw material of 100 mass% (a CSF value of 200 ml * a value increased after the CSF value is decreased to 0 ml) of lyocell fiber to be regenerated cellulose fiber and a raw material of 100 mass% (a CSF value of 100 ml) of lyocell fiber to be regenerated cellulose fiber, in which a thickness was 40 µm, a density was 0.400 g/cm³, a tensile strength was 12.7 N/15 mm, a droplet elimination time was 160 seconds on one surface and 60 seconds on the opposite surface, a ratio of the droplet elimination times was 2.7, an airtightness was 200 sec./100 ml, and an average pore size was 0.5 µm.

### [Conventional Example 3]

A separator manufactured by a method similar to the method described in Example 1 of Patent Literature 3 was produced and used as a separator of Conventional Example 3.

The separator of Conventional Example 3 was a cylinder one-layer separator made of a raw material having a CSF value of 600 ml obtained by mixing 99.5 mass% of acrylic staple fiber and 0.5 mass% of fibrillated cellulose fiber, in which a thickness was 40 µm, a density was 0.300 g/cm³, a tensile strength was 8.5 N/15 mm, a droplet elimination time was 6 seconds on one surface and 5 seconds on the opposite surface, a ratio of the droplet elimination times was 1.2, an airtightness was 2 sec./100 ml, and an average pore size was 16.0 µm.

### [Conventional Example 4]

A separator manufactured by a method similar to the method described in Example 1 of Patent Literature 4 was produced and used as a separator of Conventional Example 4.

The separator of Conventional Example 4 was a single-layer separator by a wet method made of a raw material containing 100 mass% of PET fiber, in which a thickness was 40 µm, a density was 0.630 g/cm³, a tensile strength was 17.6 N/15 mm, a droplet elimination time was 8 seconds on one surface and 7 seconds on the opposite surface, a ratio of the droplet elimination times was 1.1, an airtightness is 1.0 sec./100 ml, and an average pore size was 17.0 µm.

### [Conventional Example 5]

A separator manufactured by a method similar to the method described in Example 1 of Patent Literature 5 was produced and used as a separator of Conventional Example 5.

The separator of Conventional Example 5 was a threelayer separator by a dry method made of 100% of PET fiber obtained by stacking a PET fiber layer B spun by a spunbonding method on a PET fiber layer A spun by a melt-blown method and further stacking the PET fiber layer A spun by the melt-blown method, in which a thickness was 39 µm, a density was 0.510 g/cm³, a tensile strength was 24.0 N/15 mm, a droplet elimination time was 9 seconds on one surface and 8 seconds on the opposite surface, a ratio of the droplet elimination times was 1.1, an airtightness was 2.0 sec./100 ml, and an average pore size was 6.7 µm.

Table 1 shows the raw materials and mixing of the separators of Examples 1 to 7, Reference Examples 1 to 4, Comparative Examples 1 to 3, and Conventional Examples 1 to 5.

**[Table 1]**

| | Mixing of separator | | | | | |
|---|---|---|---|---|---|---|
| | Fiber layer A | | | Fiber layer B | | |
| | Raw material | Mass % | CSF value | Raw material | Mass % | CSF |
| | | | ml | | | value ml |
| Example 1 | Fibrillated aramid | 80 | 0 | Fibrillated aramid | 80 | 400 |
| | Fibrillated natural cellalose | 20 | | Fibrillated natural cellulose | 20 | |
| Example 2 | Fibrillated aramid | 20 | 20 | Fibrillated aramid | 20 | 300 |
| | Fibrillated natural cellulose | 80 | | Fibrillated natural cellulose | 80 | |
| Example 3 | Fibrillated aramid | 50 | 40 | Fibrillated aramid | 50 | 250 |
| | Fibrillated natural cellulose | 50 | | Fibrillated natural cellulose | 50 | |
| Example 4 | Fibrillated aramid | 35 | 40 | Fibrillated aramid | 50 | 250 |
| | Fibrillated natural cellulose | 35 | | Fibrillated natural cellulose | 50 | |
| | Polyvinyl alcohol | 30 | | | | |
| Example 5 | Fibrillated aramid | 40 | 60 | Fibrillated aramid | 60 | 200 |
| | Fibrillated natural cellulose | 60 | | Fibrillated natural cellulose | 40 | |
| Example 6 | Fibrillated aramid | 30 | 80 | Fibrillated aramid | 70 | 250 |
| | Fibrillated natural cellulose | 70 | | Fibrillated natural cellulose | 30 | |
| Example 7 | Fibrillated aramid | 20 | 100 | Fibrillated aramid | 80 | 150 |
| | Fibrillated natural cellulose | 80 | | Fibrillated natural cellulose | 20 | |
| Reference Example 1 | Fibrillated aramid | 80 | 0 | Fibrillated aramid | 80 | 50 |
| | Fibrillated natural cellulose | 20 | | Fibrillated natural cellulose | 20 | |
| Reference Example 2 | Fibrillated aramid | 20 | 0 | Fibrillated aramid | 20 | 50 |
| | Fibrillated natural cellulose | 80 | | Fibrillated natural cellulose | 80 | |
| Reference Example 3 | Fibrillated aramid | 20 | 200 | Fibrillated aramid | 20 | 500 |
| | Fibrillated natural cellulose | 80 | | Fibrillated natural cellulose | 80 | |
| Reference Example 4 | Fibrillated aramid | 80 | 200 | Fibrillated aramid | 80 | 500 |
| | Fibrillated natural cellulose | 20 | | Fibrillated natural cellulose | 20 | |
| Comparative Example 1 | Fibrillated aramid | 10 | 300 | Fibrillated aramid | 10 | 600 |
| | Fibrillated natural cellulose | 90 | | Fibrillated natural cellulose | 90 | |
| Comparative Example 2 | Fibrillated aramid | 30 | 0 | Fibrillated aramid | 50 | 50 |
| | Fibrillated natural cellulose | 30 | | Fibrillated natural cellulose | 50 | |
| | Polyvinyl alcohol | 40 | - | | | - |
| Comparative Example 3 | Fibrillated aramid | 90 | 50 | Fibrillated aramid | 90 | 500 |
| | Fibrillated natural cellulose | 10 | | Fibrillated natural cellulose | 10 | |
| Conventional Example 1 | Fibrillated aramid | 100 | 0 | Fibrillated aramid | 100 | 700 |
| | - | - | | - | - | |
| Conventional Example 2 | Lyocell | 100 | 200* Value increased after CSF value is decreased to 0 ml | Lyocell | 100 | 100 |
| | - | | | - | | |
| Conventional Example 3 | Acrylic staple fiber | 99.5 | 600 | - | | - |
| | Fibrilllted cellulose | 0.5 | | - | | |
| Conventional Example 4 | PET | 100 | - | | - | - |
| | - | | | - | | |
| Conventional Example 5 | PET(MB) | 100 | - | PET(SB) | 100 | - |
| | - | - | | - | - | |

Table 2 shows the evaluation results of each separator.

**[Table 2]**

| | Separator characteristics | | | | | | | |
|---|---|---|---|---|---|---|---|---|
| | Thickness | Density | Tensile strength of 7.0 or more | Droplet elimination time | | Ratio of droplet elimination times | Airtightness | Average pore size |
| | *µ*m | g/cm³ | N/15mm | One surface Opposite surface | | - | Sec./100 ml | *µ*m |
| | | | | Sec. | Sec. | | | |
| Example 1 | 20 | 0.500 | 9.8 | 17 | 10 | 1.7 | 280 | 0.1 |
| Example 2 | 70 | 0.300 | 14.3 | 200 | 150 | 1.3 | 350 | 0.5 |
| Example 3 | 40 | 0.250 | 7.0 | 250 | 200 | 1.3 | 200 | 3.0 |
| Example 4 | 35 | 0.600 | 12.5 | 350 | 200 | 1.8 | 50 | 15.0 |
| Example 5 | 60 | 0.200 | 11.7 | 150 | 150 | 1.0 | 10 | 13.0 |
| Example 6 | 30 | 0.400 | 13.1 | 120 | 80 | 1.5 | 250 | 1.0 |
| Example 7 | 50 | 0.350 | 10.5 | 100 | 50 | 2.0 | 150 | 10.0 |
| Reference Example 1 | 30 | 0.300 | 12.0 | 280 | 250 | 1.1 | 400 | 0.5 |
| Reference Example 2 | 50 | 0.350 | 16.0 | 330 | 300 | 1.1 | 340 | 0.08 |
| Reference Example 3 | 35 | 0.500 | 9.9 | 50 | 40 | 1.3 | 15 | 18.0 |
| Reference Example 4 | 40 | 0.400 | 8.5 | 120 | 100 | 1.2 | 5 | 14.0 |
| Comparative Example 1 | 50 | 0.300 | 10.5 | 10 | 7 | 1.4 | 12 | 17.0 |
| Comparative Example 2 | 40 | 0.350 | 16.8 | 400 | 220 | 1.8 | 110 | 0.09 |
| Comparative Example 3 | 30 | 0.400 | 5.8 | 240 | 80 | 3.0 | 9 | 11.0 |
| Conventional Example 1 | 50 | 0.639 | 55.0 | 1100 | 60 | 18.3 | Unmeasurable | Unmeasurable |
| Conventional Example 2 | 40 | 0.400 | 12.7 | 160 | 60 | 2.7 | 200 | 0.5 |
| Conventional Example 3 | 40 | 0.300 | 8.5 | 6 | 5 | 1.2 | 2 | 16.0 |
| Conventional Example 4 | 40 | 0.630 | 17.6 | 8 | 7 | 1.1 | 1 | 17.0 |
| Conventional Example 5 | 39 | 0.510 | 24.0 | 9 | 8 | 1.1 | 2 | 6.7 |

Aluminum electrolytic capacitors produced using the separators of Examples, Reference Examples, Comparative Examples, and Conventional Examples described above are solid electrolytic capacitors with a rated voltage of 6.3 V for low voltage and solid electrolytic capacitors with a rated voltage of 50 V for high voltage. Further, as hybrid electrolytic capacitors produced using the separators of Examples, Reference Examples, Comparative Examples, and Conventional Examples described above, capacitors with a rated voltage of 16 V for low voltage and capacitors with a rated voltage of 80 V for high voltage are produced.

Hereinafter, the evaluation results of Examples, Reference Examples, Comparative Examples, and Conventional Examples will be described in detail.

### [Example 1]

The solid electrolytic capacitor using the separator of Example 1 and having a rated voltage of 6.3 V had an ESR of 9 mΩ, an electrostatic capacity of 720 µF, and a short-circuit defect rate of 0.0%. The solid electrolytic capacitor with a rated voltage of 50 V had an ESR of 13 mΩ, an electrostatic capacity of 55 µF, and a short-circuit defect rate of 0.0%.

The hybrid electrolytic capacitor using the separator of Example 1 and having a rated voltage of 16 V had an ESR of 10 mΩ, an electrostatic capacity of 415 µF, and a short-circuit defect rate of 0.0%. The hybrid electrolytic capacitor with a rated voltage of 80 V had an ESR of 18 mΩ, an electrostatic capacity of 40 µF, and a short-circuit defect rate of 0.0%.

### [Example 2]

The solid electrolytic capacitor using the separator of Example 2 and having a rated voltage of 6.3 V had an ESR of 12 mΩ, an electrostatic capacity of 675 µF, and a short-circuit defect rate of 0.0%. The solid electrolytic capacitor with a rated voltage of 50 V had an ESR of 17 mΩ, an electrostatic capacity of 51 µF, and a short-circuit defect rate of 0.0%.

The hybrid electrolytic capacitor using the separator of Example 2 and having a rated voltage of 16 V had an ESR of 13 mΩ, an electrostatic capacity of 375 µF, and a short-circuit defect rate of 0.0%. The hybrid electrolytic capacitor with a rated voltage of 80 V had an ESR of 23 mΩ, an electrostatic capacity of 38 µF, and a short-circuit defect rate of 0.0%.

### [Example 3]

The solid electrolytic capacitor using the separator of Example 3 and having a rated voltage of 6.3 V had an ESR of 14 mΩ, an electrostatic capacity of 630 µF, and a short-circuit defect rate of 0.0%. The solid electrolytic capacitor with a rated voltage of 50 V had an ESR of 20 mΩ, an electrostatic capacity of 48 µF, and a short-circuit defect rate of 0.0%.

The hybrid electrolytic capacitor using the separator of Example 3 and having a rated voltage of 16 V had an ESR of 16 mΩ, an electrostatic capacity of 360 µF, and a short-circuit defect rate of 0.0%. The hybrid electrolytic capacitor with a rated voltage of 80 V had an ESR of 28 mΩ, an electrostatic capacity of 35 µF, and a short-circuit defect rate of 0.0%.

### [Example 4]

The solid electrolytic capacitor using the separator of Example 4 and having a rated voltage of 6.3 V had an ESR of 16 mΩ, an electrostatic capacity of 585 µF, and a short-circuit defect rate of 0.0%. The solid electrolytic capacitor with a rated voltage of 50 V had an ESR of 23 mΩ, an electrostatic capacity of 44 µF, and a short-circuit defect rate of 0.0%.

The hybrid electrolytic capacitor using the separator of Example 4 and having a rated voltage of 16 V had an ESR of 18 mΩ, an electrostatic capacity of 325 µF, and a short-circuit defect rate of 0.0%. The hybrid electrolytic capacitor with a rated voltage of 80 V had an ESR of 32 mΩ, an electrostatic capacity of 33 µF, and a short-circuit defect rate of 0.0%.

### [Example 5]

The solid electrolytic capacitor using the separator of Example 5 and having a rated voltage of 6.3 V had an ESR of 10 mΩ, an electrostatic capacity of 720 µF, and a short-circuit defect rate of 0.0%. The solid electrolytic capacitor with a rated voltage of 50 V had an ESR of 13 mΩ, an electrostatic capacity of 54 µF, and a short-circuit defect rate of 0.0%.

The hybrid electrolytic capacitor using the separator of Example 5 and having a rated voltage of 16 V had an ESR of 9 mΩ, an electrostatic capacity of 400 µF, and a short-circuit defect rate of 0.0%. The hybrid electrolytic capacitor with a rated voltage of 80 V had an ESR of 19 mΩ, an electrostatic capacity of 41 µF, and a short-circuit defect rate of 0.0%.

### [Example 6]

The solid electrolytic capacitor using the separator of Example 6 and having a rated voltage of 6.3 V had an ESR of 14 mΩ, an electrostatic capacity of 630 µF, and a short-circuit defect rate of 0.0%. The solid electrolytic capacitor with a rated voltage of 50 V had an ESR of 20 mΩ, an electrostatic capacity of 49 µF, and a short-circuit defect rate of 0.0%.

The hybrid electrolytic capacitor using the separator of Example 6 and having a rated voltage of 16 V had an ESR of 16 mΩ, an electrostatic capacity of 350 µF, and a short-circuit defect rate of 0.0%. The hybrid electrolytic capacitor with a rated voltage of 80 V had an ESR of 27 mΩ, an electrostatic capacity of 36 µF, and a short-circuit defect rate of 0.0%.

### [Example 7]

The solid electrolytic capacitor using the separator of Example 7 and having a rated voltage of 6.3 V had an ESR of 16 mΩ, an electrostatic capacity of 585 µF, and a short-circuit defect rate of 0.0%. The solid electrolytic capacitor with a rated voltage of 50 V had an ESR of 23 mΩ, an electrostatic capacity of 44 µF, and a short-circuit defect rate of 0.0%.

The hybrid electrolytic capacitor using the separator of Example 7 and having a rated voltage of 16 V had an ESR of 18 mΩ, an electrostatic capacity of 325 µF, and a short-circuit defect rate of 0.0%. The hybrid electrolytic capacitor with a rated voltage of 80 V had an ESR of 32 mΩ, an electrostatic capacity of 33 µF, and a short-circuit defect rate of 0.0%.

### [Reference Example 1]

The solid electrolytic capacitor using the separator of Reference Example 1 and having a rated voltage of 6.3 V had an ESR of 17 mΩ, an electrostatic capacity of 563 µF, and a short-circuit defect rate of 0.0%. The solid electrolytic capacitor with a rated voltage of 50 V had an ESR of 25 mΩ, an electrostatic capacity of 43 µF, and a short-circuit defect rate of 0.0%.

The hybrid electrolytic capacitor using the separator of Reference Example 1 and having a rated voltage of 16 V had an ESR of 21 mΩ, an electrostatic capacity of 313 µF, and a short-circuit defect rate of 0.0%. The hybrid electrolytic capacitor with a rated voltage of 80 V had an ESR of 34 mΩ, an electrostatic capacity of 31 µF, and a short-circuit defect rate of 0.0%.

### [Reference Example 2]

The solid electrolytic capacitor using the separator of Reference Example 2 and having a rated voltage of 6.3 V had an ESR of 18 mΩ, an electrostatic capacity of 540 µF, and a short-circuit defect rate of 0.0%. The solid electrolytic capacitor with a rated voltage of 50 V had an ESR of 25 mΩ, an electrostatic capacity of 42 µF, and a short-circuit defect rate of 0.0%.

The hybrid electrolytic capacitor using the separator of Reference Example 2 and having a rated voltage of 16 V had an ESR of 21 mΩ, an electrostatic capacity of 310 µF, and a short-circuit defect rate of 0.0%. The hybrid electrolytic capacitor with a rated voltage of 80 V had an ESR of 35 mΩ, an electrostatic capacity of 30 µF, and a short-circuit defect rate of 0.0%.

### [Reference Example 3]

The solid electrolytic capacitor using the separator of Reference Example 3 and having a rated voltage of 6.3 V had an ESR of 13 mΩ, an electrostatic capacity of 650 µF, and a short-circuit defect rate of 0.1%. The solid electrolytic capacitor with a rated voltage of 50 V had an ESR of 19 mΩ, an electrostatic capacity of 50 µF, and a short-circuit defect rate of 0.2%.

The hybrid electrolytic capacitor using the separator of Reference Example 3 and having a rated voltage of 16 V had an ESR of 15 mΩ, an electrostatic capacity of 360 µF, and a short-circuit defect rate of 0.1%. The hybrid electrolytic capacitor with a rated voltage of 80 V had an ESR of 25 mΩ, an electrostatic capacity of 36 µF, and a short-circuit defect rate of 0.1%.

### [Reference Example 4]

The solid electrolytic capacitor using the separator of Reference Example 4 and having a rated voltage of 6.3 V had an ESR of 14 mΩ, an electrostatic capacity of 660 µF, and a short-circuit defect rate of 0.2%. The solid electrolytic capacitor with a rated voltage of 50 V had an ESR of 20 mΩ, an electrostatic capacity of 51 µF, and a short-circuit defect rate of 0.1%.

The hybrid electrolytic capacitor using the separator of Reference Example 4 and having a rated voltage of 16 V had an ESR of 13 mΩ, an electrostatic capacity of 355 µF, and a short-circuit defect rate of 0.1%. The hybrid electrolytic capacitor with a rated voltage of 80 V had an ESR of 26 mΩ, an electrostatic capacity of 36 µF, and a short-circuit defect rate of 0.1%.

### [Comparative Example 1]

The solid electrolytic capacitor using the separator of Comparative Example 1 and having a rated voltage of 6.3 V had an ESR of 20 mΩ, an electrostatic capacity of 500 µF, and a short-circuit defect rate of 0.3%. The solid electrolytic capacitor with a rated voltage of 50 V had an ESR of 29 mΩ, an electrostatic capacity of 39 µF, and a short-circuit defect rate of 0.4%.

The hybrid electrolytic capacitor using the separator of Comparative Example 1 and having a rated voltage of 16 V had an ESR of 22 mΩ, an electrostatic capacity of 290 µF, and a short-circuit defect rate of 0.4%. The hybrid electrolytic capacitor with a rated voltage of 80 V had an ESR of 38 mΩ, an electrostatic capacity of 28 µF, and a short-circuit defect rate of 0.3%.

### [Comparative Example 2]

The solid electrolytic capacitor using the separator of Comparative Example 2 and having a rated voltage of 6.3 V had an ESR of 21 mΩ, an electrostatic capacity of 505 µF, and a short-circuit defect rate of 0.0%. The solid electrolytic capacitor with a rated voltage of 50 V had an ESR of 28 mΩ, an electrostatic capacity of 38 µF, and a short-circuit defect rate of 0.0%.

The hybrid electrolytic capacitor using the separator of Comparative Example 2 and having a rated voltage of 16 V had an ESR of 23 mΩ, an electrostatic capacity of 292 µF, and a short-circuit defect rate of 0.0%. The hybrid electrolytic capacitor with a rated voltage of 80 V had an ESR of 37 mΩ, an electrostatic capacity of 28 µF, and a short-circuit defect rate of 0.0%.

### [Comparative Example 3]

The solid electrolytic capacitor using the separator of Comparative Example 3 and having a rated voltage of 6.3 V had an ESR of 20 mΩ, an electrostatic capacity of 500 µF, and a short-circuit defect rate of 0.5%. The solid electrolytic capacitor with a rated voltage of 50 V had an ESR of 28 mΩ, an electrostatic capacity of 38 µF, and a short-circuit defect rate of 0.4%.

The hybrid electrolytic capacitor using the separator of Comparative Example 3 and having a rated voltage of 16 V had an ESR of 22 mΩ, an electrostatic capacity of 290 µF, and a short-circuit defect rate of 0.4%. The hybrid electrolytic capacitor with a rated voltage of 80 V had an ESR of 38 mΩ, an electrostatic capacity of 28 µF, and a short-circuit defect rate of 0.5%.

### [Conventional Example 1]

The solid electrolytic capacitor using the separator of Conventional Example 1 and having a rated voltage of 6.3 V had an ESR of 24 mΩ, an electrostatic capacity of 450 µF, and a short-circuit defect rate of 0.7%. The solid electrolytic capacitor with a rated voltage of 50 V had an ESR of 33 mΩ, an electrostatic capacity of 34 µF, and a short-circuit defect rate of 0.8%.

The hybrid electrolytic capacitor using the separator of Conventional Example 1 and having a rated voltage of 16 V had an ESR of 26 mΩ, an electrostatic capacity of 250 µF, and a short-circuit defect rate of 0.8%. The hybrid electrolytic capacitor with a rated voltage of 80 V had an ESR of 45 mΩ, an electrostatic capacity of 25 µF, and a short-circuit defect rate of 0.8%.

### [Conventional Example 2]

The solid electrolytic capacitor using the separator of Conventional Example 2 and having a rated voltage of 6.3 V had an ESR of 23 mΩ, an electrostatic capacity of 495 µF, and a short-circuit defect rate of 0.8%. The solid electrolytic capacitor with a rated voltage of 50 V had an ESR of 31 mΩ, an electrostatic capacity of 35 µF, and a short-circuit defect rate of 0.6%.

The hybrid electrolytic capacitor using the separator of Conventional Example 2 and having a rated voltage of 16 V had an ESR of 25 mΩ, an electrostatic capacity of 275 µF, and a short-circuit defect rate of 0.8%. The hybrid electrolytic capacitor with a rated voltage of 80 V had an ESR of 41 mΩ, an electrostatic capacity of 26 µF, and a short-circuit defect rate of 0.7%.

### [Conventional Example 3]

The solid electrolytic capacitor using the separator of Conventional Example 3 and having a rated voltage of 6.3 V had an ESR of 23 mΩ, an electrostatic capacity of 480 µF, and a short-circuit defect rate of 0.3%. The solid electrolytic capacitor with a rated voltage of 50 V had an ESR of 30 mΩ, an electrostatic capacity of 36 µF, and a short-circuit defect rate of 0.3%.

The hybrid electrolytic capacitor using the separator of Conventional Example 3 and having a rated voltage of 16 V had an ESR of 25 mΩ, an electrostatic capacity of 275 µF, and a short-circuit defect rate of 0.4%. The hybrid electrolytic capacitor with a rated voltage of 80 V had an ESR of 41 mΩ, an electrostatic capacity of 25 µF, and a short-circuit defect rate of 0.3%.

### [Conventional Example 4]

The solid electrolytic capacitor using the separator of Conventional Example 4 and having a rated voltage of 6.3 V had an ESR of 22 mΩ, an electrostatic capacity of 495 µF, and a short-circuit defect rate of 0.4%. The solid electrolytic capacitor with a rated voltage of 50 V had an ESR of 31 mΩ, an electrostatic capacity of 37 µF, and a short-circuit defect rate of 0.3%.

The hybrid electrolytic capacitor using the separator of Conventional Example 4 and having a rated voltage of 16 V had an ESR of 25 mΩ, an electrostatic capacity of 280 µF, and a short-circuit defect rate of 0.3%. The hybrid electrolytic capacitor with a rated voltage of 80 V had an ESR of 41 mΩ, an electrostatic capacity of 25 µF, and a short-circuit defect rate of 0.3%.

### [Conventional Example 5]

The solid electrolytic capacitor using the separator of Conventional Example 5 and having a rated voltage of 6.3 V had an ESR of 22 mΩ, an electrostatic capacity of 518 µF, and a short-circuit defect rate of 0.3%. The solid electrolytic capacitor with a rated voltage of 50 V had an ESR of 30 mΩ, an electrostatic capacity of 38 µF, and a short-circuit defect rate of 0.4%.

The hybrid electrolytic capacitor using the separator of Conventional Example 5 and having a rated voltage of 16 V had an ESR of 24 mΩ, an electrostatic capacity of 288 µF, and a short-circuit defect rate of 0.3%. The hybrid electrolytic capacitor with a rated voltage of 80 V had an ESR of 40 mΩ, an electrostatic capacity of 27 µF, and a short-circuit defect rate of 0.4%.

Table 3 shows the performance evaluation results of the solid electrolytic capacitor.

**[Table 3]**

| | Solid electrolytic capacitor | | | | | |
|---|---|---|---|---|---|---|
| | Rated voltage of 6.3 V | | | Rated voltage of 50 V | | |
| | ESR | Electrostatic capacity | Short-circuit defect rate | ESR | Electrostatic capacity | Short-circuit defect rate |
| | mΩ | *µ*F | % | mΩ | *µ*F | % |
| Example 1 | 9 | 720 | 0.0 | 13 | 55 | 0.0 |
| Example 2 | 12 | 675 | 0.0 | 17 | 51 | 0.0 |
| Example 3 | 14 | 630 | 0.0 | 20 | 48 | 0.0 |
| Example 4 | 16 | 585 | 0.0 | 23 | 44 | 0.0 |
| Example 5 | 10 | 720 | 0.0 | 13 | 54 | 0.0 |
| Example 6 | 14 | 630 | 0.0 | 20 | 49 | 0.0 |
| Example 7 | 16 | 585 | 0.0 | 23 | 44 | 0.0 |
| Reference Example 1 | 17 | 563 | 0.0 | 25 | 43 | 0.0 |
| Reference Example 2 | 18 | 540 | 0.0 | 25 | 42 | 0.0 |
| Reference Example 3 | 13 | 650 | 0.1 | 19 | 50 | 0.2 |
| Reference Example 4 | 14 | 660 | 0.2 | 20 | 51 | 0.1 |
| Comparative Example 1 | 20 | 500 | 0.3 | 29 | 39 | 0.4 |
| Comparative Example 2 | 21 | 505 | 0.0 | 28 | 38 | 0.0 |
| Comparative Example 3 | 20 | 500 | 0.5 | 28 | 38 | 0.4 |
| Conventional Example 1 | 24 | 450 | 0.7 | 33 | 34 | 0.8 |
| Conventional Example 2 | 23 | 495 | 0.8 | 31 | 35 | 0.6 |
| Conventional Example 3 | 23 | 480 | 0.3 | 30 | 36 | 0.3 |
| Conventional Example 4 | 22 | 495 | 0.4 | 31 | 37 | 0.3 |
| Conventional Example 5 | 22 | 518 | 0.3 | 30 | 38 | 0.4 |

Table 4 shows the performance evaluation results of the hybrid electrolytic capacitor.

**[Table 4]**

| | Hybrid electrolytic capacitor | | | | | |
|---|---|---|---|---|---|---|
| | Rated voltage of 16 V | | | Rated voltage of 80 V | | |
| | ESR | Electrostatic capacity | Short-circuit defect rate | ESR | Electrostatic capacity | Short-circuit defect rate |
| | mΩ | *µ*F | % | mΩ | *µ*F | % |
| Example 1 | 10 | 415 | 0.0 | 18 | 40 | 0.0 |
| Example 2 | 13 | 375 | 0.0 | 23 | 38 | 0.0 |
| Example 3 | 16 | 360 | 0.0 | 28 | 35 | 0.0 |
| Example 4 | 18 | 325 | 0.0 | 32 | 33 | 0.0 |
| Example 5 | 9 | 400 | 0.0 | 19 | 41 | 0.0 |
| Example 6 | 16 | 350 | 0.0 | 27 | 36 | 0.0 |
| Example 7 | 18 | 325 | 0.0 | 32 | 33 | 0.0 |
| Reference Example 1 | 21 | 313 | 0.0 | 34 | 31 | 0.0 |
| Reference Example 2 | 21 | 310 | 0.0 | 35 | 30 | 0.0 |
| Reference Example 3 | 15 | 360 | 0.1 | 25 | 36 | 0.1 |
| Reference Example 4 | 13 | 355 | 0.1 | 26 | 36 | 0.1 |
| Comparative Example 1 | 22 | 290 | 0.4 | 38 | 28 | 0.3 |
| Comparative Example 2 | 23 | 292 | 0.0 | 37 | 28 | 0.0 |
| Comparative Example 3 | 22 | 290 | 0.4 | 38 | 28 | 0.5 |
| Conventional Example 1 | 26 | 250 | 0.8 | 45 | 25 | 0.8 |
| Conventional Example 2 | 25 | 275 | 0.8 | 41 | 26 | 0.7 |
| Conventional Example 3 | 25 | 275 | 0.4 | 41 | 25 | 0.3 |
| Conventional Example 4 | 25 | 280 | 0.3 | 41 | 25 | 0.3 |
| Conventional Example 5 | 24 | 288 | 0.3 | 40 | 27 | 0.4 |

From Tables 3 and 4, it can be seen that the solid electrolytic capacitors using the separators of Examples 1 to 7 and having a rated voltage of 6.3 V have a low ESR of 9 to 16 mΩ, a high electrostatic capacity of 585 to 720 µF, and a low short-circuit defect rate of 0.0%. Further, it can be seen that the solid electrolytic capacitors using the same separators and having a rated voltage of 50 V also have a low ESR of 13 to 23 mΩ, a high electrostatic capacity of 44 to 55 µF, and a low short-circuit defect rate of 0.0%.

Further, the hybrid electrolytic capacitors using the same separators and having a rated voltage of 16 V also have a low ESR of 9 to 18 mΩ, a high electrostatic capacity of 325 to 415 µF, and a low short-circuit defect rate of 0.0%. Further, the hybrid electrolytic capacitors using the same separators and having a rated voltage of 80 V also have a low ESR of 18 to 32 mΩ, a high electrostatic capacity of 33 to 41 µF, and a low short-circuit defect rate of 0.0%.

In the separators of Examples 1 to 7, the droplet elimination times for one surface and the opposite surface are 10 to 350 seconds, and the ratio of the droplet elimination times is 1.0 to 2.0. For this reason, in the separator of the present embodiment, the gaps between the fibers constituting the separator can be appropriately formed, so that it is possible to enhance the impregnation property of the polymerization liquid or the dispersion liquid of the conductive polymer while maintaining the shielding property. Therefore, as the separator, it is possible to reduce the ESR and improve the electrostatic capacity while maintaining the short-circuit resistance.

In the performance of the solid electrolytic capacitor and the hybrid electrolytic capacitor using the separator of Reference Example 1, the ESR is slightly high and the electrostatic capacity is slightly low, as compared with the performance of each example. This is considered to be caused by that the airtightness of the separator of Reference Example 1 is as high as 400 sec./100 ml, and the separator is excessively dense, so that the impregnation property of the polymerization liquid or the dispersion liquid of the conductive polymer is deteriorated. From comparison of Reference Example 1 with Example 2, it can be seen that the airtightness of the separator is preferably 350 sec./100 ml or less.

In the performance of the solid electrolytic capacitor and the hybrid electrolytic capacitor using the separator of Reference Example 2, the ESR is slightly high and the electrostatic capacity is slightly low, as compared with the performance of each example. This is considered to be caused by that the average pore size of the separator of Reference Example 2 is as small as 0.08 µm, and the separator is excessively dense, so that the impregnation property of the polymerization liquid or the dispersion liquid of the conductive polymer is deteriorated. From comparison of Reference Example 2 with Example 1, it can be seen that the average pore size of the separator is preferably 0.1 µm or more.

In the performance of the solid electrolytic capacitor and the hybrid electrolytic capacitor using the separator of Reference Example 3, the short-circuit defect rate is slightly high as compared with the performance of each example. This is considered to be caused by that the average pore size of the separator of Reference Example 3 is as large as 18.0 µm, the denseness of the separator is insufficient, and the burrs and the like of the electrode foil easily penetrate the separator. From comparison of Reference Example 3 with Example 4, it can be seen that the average pore size of the separator is preferably 15.0 µm or less.

In the performance of the solid electrolytic capacitor and the hybrid electrolytic capacitor using the separator of Reference Example 4, the short-circuit defect rate is slightly high as compared with the performance of each example. This is considered to be caused by that the airtightness of the separator of Reference Example 3 is as low as 5 sec./100 ml, the denseness of the separator is insufficient, and the burrs and the like of the electrode foil easily penetrate the separator. From comparison of Reference Example 4 with Example 5, it can be seen that the airtightness of the separator is preferably 10 sec./100 ml or more.

In the performance of the solid electrolytic capacitor and the hybrid electrolytic capacitor using the separator of Comparative Example 1, the ESR is high and the electrostatic capacity is low, as compared with the performance of each example. This is considered to be caused by that the droplet elimination time of the separator of Comparative Example 1 is as short as 7 seconds, the gaps between the fibers constituting the separator are excessively wide, the capillary phenomenon hardly acts during the impregnation of the polymerization liquid or the dispersion liquid of the conductive polymer, the wettability and the spreadability are deteriorated, the impregnation unevenness occurs, and the conductive polymer layer to be the electron conduction path is not uniformly formed. From comparison of Comparative Example 1 with Example 1, it can be seen that the droplet elimination time of the separator is preferably 10 seconds or more.

Further, in the performance of the solid electrolytic capacitor and the hybrid electrolytic capacitor using the separator of Comparative Example 1, the short-circuit defect rate is high as compared with the performance of each example. This is considered to be caused by that the average pore size of the separator of Comparative Example 1 is as large as 17.0 µm, the denseness of the separator is insufficient, and the burrs and the like of the electrode foil easily penetrate the separator.

In the performance of the solid electrolytic capacitor and the hybrid electrolytic capacitor using the separator of Comparative Example 2, the ESR is high and the electrostatic capacity is low, as compared with the performance of each example. This is considered to be caused by that the droplet elimination time of the separator of Comparative Example 2 is as long as 400 seconds, and the gaps between the fibers constituting the separator are excessively dense, so that the separator is not impregnated with the polymerization liquid or the dispersion liquid of the conductive polymer, and the conductive polymer layer to be the electron conduction path cannot be formed. From comparison of Comparative Example 2 with Example 4, it can be seen that the droplet elimination time of the separator is preferably 350 seconds or less.

In the performance of the solid electrolytic capacitor and the hybrid electrolytic capacitor using the separator of Comparative Example 3, the ESR is high and the electrostatic capacity is low, as compared with the performance of each example. This is considered to be caused by that the ratio of the droplet elimination times of the separator of Comparative Example 3 is as high as 3.0, the gaps between the fibers constituting the separator surface and the inside of the separator become sparse, the homogeneity of the entire separator is low, the impregnation unevenness of the polymerization liquid or the dispersion liquid of the conductive polymer occurs, and the conductive polymer layer to be the electron conduction path is not uniformly formed. From comparison of Comparative Example 3 with Example 7, it can be seen that the ratio of the droplet elimination times of the separator is preferably 2.0 or less.

Further, in the performance of the solid electrolytic capacitor and the hybrid electrolytic capacitor using the separator of Comparative Example 3, the short-circuit defect rate is high as compared with the performance of each example. This is considered to be caused by that the airtightness of the separator of Comparative Example 3 is 9 sec./100 ml, the tensile strength is as low as 5.8 N/15 mm, the denseness of the separator is insufficient or the strength of the separator is insufficient, and the burrs and the like of the electrode foil easily penetrate the separator. From comparison of Comparative Example 3 with Example 3, it can be seen that the tensile strength of the separator is preferably 7.0 N/15 mm or more.

If the performance of the solid electrolytic capacitor and the hybrid electrolytic capacitor using the separator of Conventional Example 1 is compared with the performance of each example, in each example, the ESR is low and the electrostatic capacity is high. This is considered to be caused by that, since the droplet elimination time for one surface of the separator of Conventional Example 1 is as long as 1100 seconds, in the separator of Conventional Example 1, the gaps between the fibers are excessively dense, the impregnation property of the polymerization liquid or the dispersion liquid of the conductive polymer is poor, and the conductive polymer layer to be the electron conduction path cannot be formed.

Further, this is considered to be caused by that, since the ratio of the droplet elimination times is as high as 18.3, the homogeneity of the entire separator is low, the impregnation unevenness of the polymerization liquid or the dispersion liquid of the conductive polymer occurs, and the conductive polymer layer to be the electron conduction path is not uniformly formed. For this reason, in the separator of Conventional Example 1, the ESR cannot be reduced and the electrostatic capacity cannot be improved.

Further, if the performance of the solid electrolytic capacitor and the hybrid electrolytic capacitor using the separator of Conventional Example 1 is compared with the performance of each example, the short-circuit defect rate is decreased in each example. This is considered to be caused by that, in the separator of Conventional Example 1, since the separator is made of only fibrillated natural cellulose fiber, the cellulose fiber is gradually decomposed under acidic conditions, so that the mechanical strength of the separator is reduced, the burrs and the like of the electrode foil easily penetrate the separator, and the short-circuit defect rate is increased.

If the performance of the solid electrolytic capacitor and the hybrid electrolytic capacitor using the separator of Conventional Example 2 is compared with the performance of each example, in each example, the ESR is low and the electrostatic capacity is high. This is considered to be caused by that, in the separator of Conventional Example 2, since the ratio of the droplet elimination times is as high as 2.7, the homogeneity of the entire separator is low, the impregnation unevenness of the polymerization liquid or the dispersion liquid of the conductive polymer occurs, and the conductive polymer layer to be the electron conduction path is not uniformly formed. For this reason, in the separator of Conventional Example 2, the ESR cannot be reduced and the electrostatic capacity cannot be improved.

Further, if the performance of the solid electrolytic capacitor and the hybrid electrolytic capacitor using the separator of Conventional Example 2 is compared with the performance of each example, the short-circuit defect rate is low in each example. This is considered to be caused by that, in the separator of Conventional Example 2, since the separator is made of only regenerated cellulose fiber, the regenerated cellulose fiber is gradually decomposed under acidic conditions, so that the mechanical strength of the separator is reduced, the burrs and the like of the electrode foil easily penetrate the separator, and the short-circuit defect rate is increased.

If the performance of the solid electrolytic capacitor and the hybrid electrolytic capacitor using the separator of Conventional Example 3 is compared with the performance of each example, in each example, the ESR is low and the electrostatic capacity is high. This is considered to be caused by that, in the separator of Conventional Example 3, since the droplet elimination time for one surface of the separator is as short as 6 seconds and the droplet elimination time for the opposite surface is as short as 5 seconds, the gaps between the fibers are excessively wide, the capillary phenomenon hardly acts during the impregnation, and the wettability and the spreadability are deteriorated, so that the impregnation unevenness of the polymerization liquid or the dispersion liquid of the conductive polymer occurs, and the conductive polymer layer to be the electron conduction path is not uniformly formed. For this reason, in the separator of Conventional Example 3, the ESR cannot be reduced and the electrostatic capacity cannot be improved.

Further, if the performance of the solid electrolytic capacitor and the hybrid electrolytic capacitor using the separator of Conventional Example 3 is compared with the performance of each example, the short-circuit defect rate is low in each example. This is considered to be caused by that, in the separator of Conventional Example 3, since synthetic staple fiber to be non-fibrillated fiber is used as fiber constituting the separator, the denseness of the separator is low, the burrs and the like of the electrode foil easily penetrate the separator, and the short-circuit defect rate is increased.

If the performance of the solid electrolytic capacitor and the hybrid electrolytic capacitor using the separator of Conventional Example 4 is compared with the performance of each example, in each example, the ESR is low and the electrostatic capacity is high. This is considered to be caused by that, in the separator of Comparative Example 4, since the droplet elimination time for one surface of the separator is as short as 8 seconds and the droplet elimination time for the opposite surface is as short as 7 seconds, the gaps between the fibers are excessively wide, the capillary phenomenon hardly acts during the impregnation, and the wettability and the spreadability are deteriorated, so that the impregnation unevenness of the polymerization liquid or the dispersion liquid of the conductive polymer occurs, and the conductive polymer layer to be the electron conduction path is not uniformly formed. For this reason, in the separator of Conventional Example 4, the ESR cannot be reduced and the electrostatic capacity cannot be improved.

Further, if the performance of the solid electrolytic capacitor and the hybrid electrolytic capacitor using the separator of Conventional Example 4 is compared with the performance of each example, the short-circuit defect rate is low in each example. This is considered to be caused by that, in the separator of Conventional Example 4, since the separator is made of only synthetic staple fiber to be non-fibrillated fiber, the denseness of the separator is low, the burrs and the like of the electrode foil easily penetrate the separator, and the short-circuit defect rate is increased.

If the performance of the solid electrolytic capacitor and the hybrid electrolytic capacitor using the separator of Conventional Example 5 is compared with the performance of each example, in each example, the ESR is low and the electrostatic capacity is high. This is considered to be caused by that, in the separator of Conventional Example 5, since the droplet elimination time for one surface of the separator is as short as 9 seconds and the droplet elimination time for the opposite surface is as short as 8 seconds, the gaps between the fibers are excessively wide, the capillary phenomenon hardly acts during the impregnation, and the wettability and the spreadability are deteriorated, so that the impregnation unevenness of the polymerization liquid or the dispersion liquid of the conductive polymer occurs, and the conductive polymer layer to be the electron conduction path is not uniformly formed. For this reason, in the separator of Conventional Example 5, the ESR cannot be reduced and the electrostatic capacity cannot be improved.

Further, if the performance of the solid electrolytic capacitor and the hybrid electrolytic capacitor using the separator of Conventional Example 5 is compared with the performance of each example, the short-circuit defect rate is low in each example. This is considered to be caused by that, in the separator of Conventional Example 5, the separator is dry non-woven fabric made of continuous fiber, and the texture of the separator is poor as compared with wet non-woven fabric, so that the burrs and the like of the electrode foil easily penetrate the separator, and the short-circuit defect rate is increased.

From comparison of Example 1 to 4, it can be seen that the droplet elimination times for one surface and the opposite surface of the separator are preferably in a range of 10 to 350 seconds, more preferably in a range of 10 to 250 seconds, and still more preferably in a range of 10 to 200 seconds.

Further, from comparison of Example 5 to 7, it can be seen that the ratio of the droplet elimination times is preferably in a range of 1.0 to 2.0, more preferably in a range of 1.0 to 1.5.

As described above, according to the embodiment of the present invention, in the separator containing the synthetic fiber, the gaps between the fibers constituting the separator can be appropriately formed by controlling the droplet elimination times for one surface and the opposite surface of the separator to 10 to 350 seconds and controlling the ratio of the droplet elimination times to 1.0 to 2.0. Therefore, it is possible to enhance an impregnation property of the polymerization liquid or the dispersion liquid of the conductive polymer while maintaining a high shielding property in the separator. By using the separator of the present invention, it is possible to provide an aluminum electrolytic capacitor that realizes reduction in ESR and improvement in electrostatic capacity while maintaining high short-circuit resistance.

## Claims

1. A separator for an aluminum electrolytic capacitor, the separator being interposed between a pair of electrodes, the separator comprising
synthetic fiber, droplet elimination times for one surface and for an opposite surface being 10 to 350 seconds, a ratio of the droplet elimination times being 1.0 to 2.0.

2. The separator for an aluminum electrolytic capacitor according to claim 1, wherein an airtightness is 10 to 350 sec./100 ml, and an average pore size is 0.1 to 15.0 µm.

3. The separator for an aluminum electrolytic capacitor according to claim 1, wherein the synthetic fiber is polyamide fiber.

4. The separator for an aluminum electrolytic capacitor according to claim 3, wherein the polyamide fiber is fibrillated polyamide fiber.

5. The separator for an aluminum electrolytic capacitor according to any one of claims 1 to 4, wherein the synthetic fiber is made of only fibrillated fiber.

6. The separator for an aluminum electrolytic capacitor according to any one of claims 1 to 5, wherein the synthetic fiber contains 20 to 80 mass% of fibrillated polyamide fiber and contains 20 to 80 mass% of fibrillated natural cellulose fiber.

7. An aluminum electrolytic capacitor using the separator according to any one of claims 1 to 6.

8. The aluminum electrolytic capacitor according to claim 7, wherein a conductive polymer is used in a cathode material.
